# EUROPEAN PATENT SPECIFICATION

(11) **EP 2 884 437 B1**
(45) Date of publication and mention of the grant of the patent: **17.02.2021**
(21) Application number: 14197417.0
(22) Date of filing: 11.12.2014
(51) Int. Cl.: G06Q 10/08, G06Q 10/06, B65D 90/48, G01F 22/00

(54) **Method, control unit and computer program product for controlling a product loading state of at least one compartment in a tank vehicle**
Verfahren, Steuerungseinheit und Computerprogrammprodukt zur Steuerung eines Produktladezustandes von mindestens einer Kammer in einem Tankfahrzeug
Procédé, unité de commande et produit de programme informatique permettant de commander un état de chargement de produits d'au moins un compartiment dans un réservoir de véhicule

(30) Priority: 11.12.2013 ES 201331805
(43) Date of publication of application: 17.06.2015
(73) Proprietor: Repsol, S.A., 28045 Madrid (ES); Equiptank Engineering, S.L., 25320 Anglesola (ES)
(72) Inventor: Henche Ramirez, Jose Luis, 28045 Madrid (ES); Gonzalez Maestre, Esteban, 28045 Madrid (ES); Calero Mora, Enrique, 28045 Madrid (ES); Barranquero Chamorro, Oscar, 28045 MADRID (ES); Sole de Aguiar, Juan Leandro, 25320 Anglesola (ES); Sole de Aguiar, Xavier, 25320 Anglesola (ES)
(74) Representative: ZBM Patents - Zea, Barlocci & Markvardsen

(56) References cited:
- WO-A1-2011/022778
- ES-A1- 2 165 268
- GB-A- 2 318 567
- US-A- 5 964 258
- US-A1- 2004 064 336

## Description

The present invention relates to a method for detecting tampering of at least one compartment in a tank vehicle.

The invention further relates to a control unit and to a computer program product for detecting tampering of at least one compartment in a tank vehicle, suitable for carrying out this method.

The invention is applicable to tank vehicles intended mainly for transporting fuel, combustibles or the like (for example, any other type of element in liquid form, such as chemicals). Such tank vehicles may be, among others, tank trailers, tank trucks or they may be part of a tank train.

### BACKGROUND ART

Tank vehicles for transporting certain products usually comprise a plurality of separate compartments, each of which can store a different product. The main problem with such tank vehicles relates to tampering that compartments and products stored therein may undergo, for example, during transportation from the loading centre to the customer centre (for example, a service station). The purpose of tampering may be, among others, stealing the product stored therein and/or replacing it with a lower quality product.

At present technical systems are known in the art for controlling a product loading state of at least one compartment in a tank vehicle in order to seal the compartment and thereby for tamper detection. The main purpose of these systems is not so much to avoid tampering of the compartments and products stored therein (it has been shown over time that any system to prevent tampering of compartments in a tank vehicle is vulnerable if time allows and there is sufficient knowledge) but rather to generate adequate evidence to show tampering (for example, tampering performed before the tank vehicle reaches the customer centre), whereby these systems are intended to ensure that the product being unloaded from each compartment at the customer centre is the same in quantity and quality as that being loaded at the loading centre.

Thus, for example, Spanish patent ES 2150399 B1, titled *"Dispositivo para el precintado de compartimentos en cisternas para el transporte de hidrocarburos"* discloses a device that is mounted in a tank vehicle and that comprises a sensor arranged on the dust cover intended to close the filling/discharge valve in each compartment, whose sensor when the cover is in a closed position contacts the filling/discharge valve inner flap; and a programmable controller that receives electronic signals generated by said sensors when detecting contact or lack of contact with the flap of the filling/discharge valve they operate. Thus, the controller stores said electronic signals and makes them indelible. In addition, such controller generates electronic signals to a light box reporting the state of each of the compartments.

The main drawback of the above described device is that it is only capable of compartment tamper detection at the level of the filling/discharge valves, that is, when the dust cover is inappropriately disconnected from the corresponding filling/discharge valve by someone when the compartment is loaded. Thus, the programmable controller only warns about tampering of the compartment when electronic signals from the sensors arranged on the dust cover are received, but it is not capable of tamper detection of the compartment or the product stored in the compartment when tampering is performed, for example, through any of the openings in the compartment, such as the manhole cover or the guide tube for measuring the product level in the compartment.

On the other hand, systems are known for mechanical sealing of filling/discharge valves in tank vehicles. Thus, for example, the Spanish patent ES 2116239 B1, titled *"Sistema de precintado de bocas de carga y descarga de producto en vehículos cisterna",* discloses a mechanical system which basically comprises a receiver of a control signal generated by an electronic subsystem; an element for sealing each of the filling/discharge valves associated with the compartments (for example, a metal plate that is arranged facing each of said openings); a pneumatic cylinder for actuating the sealing element; and a pneumatic solenoid valve capable of receiving an electrical signal and/or a pneumatic signal from the receiver and acting on the pneumatic cylinder either for sealing or unsealing the openings. Furthermore, the system further comprises a compressed air storage tank, whose purpose is triggering actuation of the pneumatic cylinder when the passage of air is allowed by the pneumatic solenoid valve when receiving a signal from the receiver; flow controllers; and manual push buttons for activating a two-hand safety device acting on the pneumatic solenoid valve to allow air pass from the air storage tank to the pneumatic cylinder.

From the above described configuration, it is possible to mechanically seal or unseal the filling/discharge valves in the compartments:
- For sealing, when a control signal from the electronic subsystem is received by the receiver, it acts on the pneumatic valve to allow air pass from the air tank to the pneumatic cylinder so that its stem is moved and the sealed element is pushed to a position facing the loading/unloading opening, preventing a discharge hose from being connected;
- For unsealing, once sealing has been verified by a customer centre representative, the push buttons are manually pressed acting on the safety device so that air flows through the air tank to the pneumatic valve causing the pneumatic cylinder stem to move in the opposite direction. The movement of the stem also involves the movement of the sealing element allowing product unloading.

Again, this described solution only allows handling of one compartment to be determined at the level of the filling/discharge valves, especially when the vehicle arrives at the customer centre with some of the filling/discharge valves unsealed (that is, with any of the filling/discharge valves being accessible as the metal plate to protect it from tampering has been removed). In addition, it does not allow tracking of tampering. Therefore, it is an unreliable and inefficient solution.

ES2165268 (A1) discloses a control system for tank vehicles.

### SUMMARY OF THE INVENTION

There is therefore a need for new methods, computer program products and control units for detecting tampering of at least one compartment in a tank vehicle, which solve at least some of the aforementioned problems. An object of the present invention is to meet said need.

The invention is defined by the independent claims. Particular embodiments are defined in the dependent claims.

This object is achieved by providing a method for detecting tampering of at least one compartment in a tank vehicle, the compartment comprising at least one bottom valve and a product filling/discharge valve, the method comprising:
- Receiving a control signal generated by a first sensor element adapted to detect the opening/closing of the bottom valve and to generate a control signal indicative of the state of the bottom valve;
- Receiving a control signal generated by a second sensor element adapted to detect the opening/closing of the product filling/discharge valve and to generate a control signal indicative of the state of the filling/discharge valve;
- Receiving a control signal generated by a third sensor element adapted to detect presence/absence of product in the compartment and to generate a control signal indicative of presence/absence of product in this compartment;
- Setting the compartment loading state from the received control signals.

In this way, it is possible to determine the state of each compartment in the tank vehicle from the control signals generated by at least three sensor elements arranged in strategic locations of the compartment. This ensures that the control of the vehicle state is more reliable and efficient since the state of the filling/discharge valve is not only controlled but the state of the bottom valve and the presence or absence of product inside the compartment are also taken into account.

It is important to note that the present description is given based on a tank vehicle comprising at least one compartment for storing products. Since the operation of each compartment is independent from the rest, the operation of the invention is described for only one compartment but all what is described herein is applicable to each of them.

On the other hand, the control signals generated by the different sensor elements may be of different natures. Thus, for example, they may be electrical or electronic signals. They may even be data signals or other type provided they are indicative of the state (open/closed, absence/presence of product, etc.) of the elements (bottom valve, filling/discharge valve, etc.) with which the sensor elements are associated.

According to one embodiment the method may comprise:
- Receiving as a control signal from the first sensor element a signal indicative that the bottom valve is closed;
- Receiving as a control signal from the second sensor element a signal indicative that the filling/discharge valve is closed;
- Receiving as a control signal from the third sensor element a signal indicative of the absence of product in the filling/discharge pipe;
- Setting the loading state of the compartment as empty from these received control signals.

In this case, from the received control signals, a control unit (either computer or electronic related or a combination thereof), which will be described below, may set that the compartment is empty after discharge. It is understood that the state of the sensor elements described for the compartment empty sate may be the initial state for the rest of the possible compartment loading states.

At this point it is important to note that, as described below, closing of the filling/discharge valve may be caused by disconnecting the discharge hose once the unloading of the compartment has occurred. When closing of the filling/discharge valve is detected, closing of the bottom valve occurs. According to one embodiment, closing of this valve may be carried out pneumatically either by automatic activation of the pneumatic distributor when closing of the filling/discharge valve is detected or alternatively, by actuation of the control unit (for example, it is capable of pneumatically causing the bottom valve to be closed, by generating a control signal to a pneumatic distributor present in the tank vehicle).

In addition, the control unit can generate a control signal to a display screen for displaying an indication of the compartment state as empty or any other state thereof (loading, loaded, sealed, unsealed, etc.).

According to various embodiments, the control unit may comprise a display screen for all the compartments, various display screens for all of the compartments (that is, for example, each display screen can display the loading state of several compartments) or a display screen for each compartment. On the other hand, said display screens may not be part of the control unit, that is, they may be display screens external to the control unit.

In the event that the control unit has no intelligence, that is, in the event that the control unit is capable of:
- Receiving a control signal generated by a first sensor element adapted to detect the opening/closing of the bottom valve and to generate a control signal indicative of the state of this bottom valve;
- Receiving a control signal generated by a second sensor element adapted to detect the opening/closing of the product filling/discharge valve and to generate a control signal indicative of the state of the filling/discharge valve;
- Receiving a control signal generated by a third sensor element adapted to detect the presence/absence of product in the compartment and to generate a control signal indicative of the presence/absence of product in this compartment;
but it is not capable of setting the loading state of the compartment from the received control signals, but rather is only capable of transmitting said received information to the control unit external to the vehicle (for example, a control unit remote to the vehicle, such as at the loading centre or the customer centre), then the presence of the display screen may not be required since the control unit does not have information regarding the compartment state.

According to a further embodiment the method may comprise, starting from a loading state as empty:
- Receiving as a control signal from the first sensor element a signal indicative that the bottom valve is open;
- Receiving as a control signal from the second sensor element a signal indicative that the filling/discharge valve is open;
- Setting again the compartment loading state as empty by receiving as a control signal from the third sensor element a new signal indicative of absence of product in the compartment.

At this point it is important to note that the opening of the filling/discharge valve may be caused, for example, by opening of the box for housing the filling/discharge valves or by connecting the loading arm to this valve. When the opening of the filling/discharge valve is detected, the opening of the bottom valve occurs. According to one embodiment, the opening of this valve may be carried out pneumatically, either by automatic actuation of the pneumatic distributor when the opening of the filling/discharge valve is detected, or alternatively as the control unit is detected (when such change of the state of the filling/discharge valve is detected a control signal is generated for also causing the opening of the bottom valve (for example, pneumatically acting on the above described pneumatic actuator).

In this case, before the loading state of the compartment is finally set by the control unit as empty after discharge, a compartment empty state verification is performed by the control unit. This action is required since if remaining product is present within the compartment contamination of a subsequently loaded product and/or overfilling of the compartment may occur. The presence of this remaining product may be due to product remaining in the walls of the compartment during discharge, which product falls to the bottom of the compartment and after a period of time (if the amount of product is enough) it is detected by the third sensor element arranged in the compartment.

In summary, once the compartment empty state has been set it is possible for the control unit to perform an empty compartment verification before starting a new loading process. This requires causing in some way the opening of the bottom valve and determining if the presence of product in the compartment is detected or not by the third sensor element. If the presence of product is not detected, an empty state is set again by the control unit. In the event that a control signal indicative of the presence of product in the compartment is received by the third sensor element, the control unit may:
- Set the compartment loading state as purge by receiving as a control signal from the third sensor element a signal indicative of the presence of product in the compartment;
- Once the compartment has been purged, receive as a control signal from the third sensor element a signal indicative of the absence of product in the compartment.

Thus, according to one embodiment the control unit may only act on the bottom valve when the empty verification has to be performed, and it might not act in any way on the filling/discharge valve (in purging, so that the state change into "empty" occurs, the third sensor element arranged in the compartment should indicate the absence of product, the sensor element associated with the bottom valve should indicate its opening, with the state of the filling/discharge valve being indifferent). Therefore, except for empty verification, opening and closing of the filling/discharge valve would be controlled through connecting and disconnecting respectively the loading arm or the discharge hose, while the bottom valve would pneumatically open or close depending on the state of the filling/discharge valve.

In any case, from the product absence signal generated by the third sensor element arranged in the compartment, the control unit is already capable of setting again an empty state for the compartment.

Furthermore, there is also a possibility that the system prevents a compartment to be loaded in the event that it contains retained or remaining product. Thus, in the event that any of the liquid sensors (basically the sensor arranged in the compartment) detects the presence of product in the compartment, the control unit is capable of preventing it from being loaded by cutting off the signal ground in the socket (pin nine in case of a five-wire system or pin eight in case of a two-wire system). The socket is the element that connects the tank vehicle overfill prevention system with the controller of said system in the loading centre. If a correct ground connection is not detected by this controller, loading is not authorized.

Subsequently, the control unit is capable of:
- Receiving as a control signal from the first sensor element a signal indicative that the bottom valve is closed;
- Receiving as a control signal from the second sensor element a signal indicative that the filling/discharge valve (6) is closed.

Reception of these signals may be due to the fact that the control unit may cause, by generating an appropriate control signal, the closing thereof, although it could be also an action external to the control unit (mainly that involving actuation on the filling/discharge valve). Closing of the valves after an empty state verification has been carried out may be caused, among others, by legal issues.

Once the compartment empty state has been definitely set by the control unit, this control unit is capable of:
- Receiving as a control signal from the first sensor element a signal indicative that the bottom valve is open;
- Receiving as a control signal from the second sensor element a signal indicative that the filling/discharge valve is open;
- Receiving as a control signal from the third sensor element a signal indicative of the presence of product in the compartment;
- Setting the compartment loading state as loading, from these control signals received.

The opening of the filling/discharge valve may be caused by connecting the loading arm to this valve, while the opening of the bottom valve may be caused by the opening of the filling/discharge valve. Thus, as mentioned above, this opening of the bottom valve may be caused, for example, by the control unit in response to a received a control signal from the second sensor element indicative of the opening of the filling/discharge valve, or its opening may be caused pneumatically after the opening of the filling/discharge valve.

Once the compartment loading has been completed, the control unit is capable of:
- Receiving as a control signal from the first sensor element a signal indicative that the bottom valve is closed;
- Receiving as a control signal from the second sensor element a signal indicative that the filling/discharge valve is closed;
- Receiving as a control signal from the third sensor element a signal indicative of the presence of load in the compartment;
- Setting the compartment loading state as loaded, from these control signals received.

At this point it should be noted that usually the control unit is not the one that determines the amount of product to be loaded into each compartment of the tank vehicle. This amount of product is previously predefined in the loading centre and it may depend on many factors (for example, compartment capacity, product needs in the customer centre, etc.).

On the other hand, closing of the filling/discharge valve may be caused by disconnecting the loading arm once unloading has been completed. Closing of the bottom valve may be caused, for example, by the control unit when closing of the filling/discharge valve has been detected or it may be caused by a pneumatic actuation caused by closing of the filling/discharge valve, without the intervention of the control unit.

After the compartment state has been set as loaded, it is necessary that this compartment is electronically sealed by the control unit. Thus, the control unit can set the compartment state as sealed when:
- A control signal is received generated by a fourth sensor element adapted to detect the opening/closing the box for housing the filling/discharge valves and to generate a control signal indicative of the state of this box for housing the filling/discharge valves, such generated control signal being indicative that the box for housing filling/discharge valve is closed.

Clearly, there may be other actions that can cause the sealing of the compartment. Thus, alternatively or additionally the control unit is capable of also setting the compartment state as sealed, for example:
- Through a signal from a GPS (described below), which indicates that the tank vehicle is in the authorized place of loading;
- By pushing a sealing button, or a sequence of buttons;
- Through a control signal produced by the control unit over a predetermined time elapsed since the tank vehicle has been started;
- Automatically once the filling/discharge valve and the bottom valve have been closed and for a predetermined period of time the filling/discharge valve has not been opened again.

When the compartment state has been set as sealed by the control unit, the destination of the tank vehicle is the customer centre (for example, a service station). If during the travel (that is, during the time taken by the tank vehicle to go from the loading centre to the customer centre) tampering of any of the elements of the compartment (bottom valve, filling/discharge valve, etc.) or the tank vehicle (box for housing the filling/discharge valves, etc.) occurs which may allow access to the product stored in the compartment, the control unit may cause the compartment to be electronically unsealed. Thus, the control unit may set a compartment unsealed state due to tampering when:
- At least one control signal from any of the sensor elements, indicative of a state change is received.

At this point it should be noted that the tank vehicle compartment might comprise other sensor elements than those described so far, whose tampering may result in the compartment to be unsealed. Basically, each of the openings formed in the compartment, through which the stored product can be can accessed, may have a sensor element associated therewith adapted to detect the opening/closing of this opening and to generate a control signal indicative of the state of this opening. Similarly, any element of the tank vehicle whose operation may give rise to access to the product stored in the compartment may also have a sensor element associated therewith adapted to detect such tampering and to generate a control signal indicative of this.

A non-exhaustive list of some of these elements may be as follows:
- the compartment may comprise a manhole cover which may have a sensor element associated therewith adapted to detect the opening/closing of the manhole cover and to generate a control signal indicative of the state of the manhole cover;
- the compartment may comprise a cap of a guide tube for measuring the product level in the compartment, which may have a sensor element associated therewith adapted to detect the opening/closing of the cap of the guide tube for measuring the product level in the compartment and to generate a signal indicative of the state of this cap of the measuring guide tube;
- the tank vehicle may comprise a box for housing the control unit, which may have a sensor element associated therewith adapted to detect the opening/closing of the box for housing the control unit and to generate a control signal indicative of the state of this box for housing the control unit;
- the tank vehicle may comprise a box for housing a pneumatic distributor which may have a sensor element associated therewith adapted to detect the opening/closing of the box for housing the pneumatic distributor and to generate a control signal indicative of the state of this box for housing the pneumatic distributor.

Thus, if the compartment is in a sealing state and at least one control signal is received from any of the above mentioned sensor elements (or from another not described but that may be in some embodiments) when the tank vehicle is moving to the customer centre (that is, from the moment the vehicle leaves the loading centre until it reaches the customer centre), the control unit can set the state of the compartment as "unsealed". The control unit, as for the other states, may cause the display screen (whether it is part of the control unit or it is external thereto) to show such unsealed state, such that compartment tampering can be detected by the driver of the vehicle and/or any representative of the customer centre, even being possible the vehicle to be refused and the situation to be reported.

In the event that no compartment tampering occurs, the customer centre will be reached in a sealed state (this situation can be determined by the driver of the vehicle and/or any representative of the customer centre through, for example, the display screen). In this situation, unsealing of the compartment should be carried out voluntarily and in a permitted manner before unloading. Thus, unsealing of the compartment may voluntarily occur when, for example:
- the discharge hose is connected to the filling/discharge valve;
- any of the elements having a sensor element associated therewith are actuated;
- the compartment is mechanically unsealed (if the vehicle includes this system);
- a winder arranged in the tank vehicle is actuated;
- any drawer for housing elements that allow product to be unloaded is actuated;
- a button or a set of buttons for unsealing the compartment is actuated.

Then, starting from the loading state of the compartment as unsealed the control unit is capable of:
- Receiving as a control signal from the first sensor element a signal indicative that the bottom valve is open;
- Receiving as a control signal from the second sensor element a signal indicative that the filling/discharge valve is open;
- Receiving as a control signal from the third sensor element a signal indicative of the presence of product in the compartment;
- Setting the loading state of the compartment as unloading, from these control signals received.

The opening of the filling/discharge valve may be caused by connecting the discharge hose to said filling/discharge valve, while opening of the bottom valve may be caused by the control unit itself, after receiving the control signal indicative of the opening of the filling/discharge valve, or it may be caused pneumatically after the opening of the filling/discharge valve without intervention of the control unit.

Once compartment unloading has occurred, the compartment state is set as empty by the control unit, such that the control method returns to the start.

As mentioned above, in order to carry out the control method described so far a control unit (or similar device) is required capable of performing all its steps. Thus, according to a further aspect, a control unit is provided comprising:
- Computer/electronic means for receiving a control signal generated by a first sensor element adapted to detect the opening/closing of the bottom valve and to generate a control signal indicative of the state of this bottom valve;
- Computer /electronic means for receiving a control signal generated by a second sensor element adapted to detect the opening/closing of the product filling/discharge valve and to generate a control signal indicative of the state of the filling/discharge valve;
- Computer/electronic means for receiving a control signal generated by a third sensor element adapted to detect the presence/absence of product in the compartment and to generate a control signal indicative of presence/absence of product in this compartment;
- Computer/electronic means for setting the compartment loading state from the received control signals.

In addition, the control unit may comprise other computer/electronic means required to perform the rest of the steps of the above described method.

According to this embodiment, all of the means may be computer means, all of the means may be electronic means, or they may be also a combination thereof, that is, the control unit may comprise computer means for performing certain steps and it may comprise electronic means for performing the rest of the steps.

In the event that the control unit is completely computer related, it might comprise a memory and a processor, wherein the memory stores computer program instructions executable by the processor, these instructions comprising functionalities for executing the method for controlling a product loading state of at least one compartment in the above described tank vehicle.

Regardless of the nature of the control unit, it may also comprise, inter alia, any of the following:
- a satellite positioning system (GPS);
- a memory for storing at least information relating to the tank vehicle compartment state. This memory may also be suitable for storing state changes of any of the sensors, locations, times, etc.
- a module for connecting the control unit to at least one communications network such as a global communications network (e.g. Internet);
- a wireless communication system, for example, short ranged;
- a display screen for displaying at least the compartment loading state.

The GPS may have multiple applications among which it is to be highlighted the fact that it could allow the position to be known where the tank vehicle is at any time either from a central control unit (the control unit provided in the vehicle could provide this information to the central control unit via the module for connecting the system to a communications network) and from the control unit provided in the vehicle itself (the information might be stored in the data storage memory included in the control unit or external thereto present in the vehicle for subsequent verification). On the other hand, the GPS would allow the position where each event is generated to be known, so that all events occurring in the tank vehicle (loading, discharge, sealing, unsealing, etc.) could be geo-positioned.

Furthermore, the GPS could allow the control unit to authorize, or not, in real time an action on a compartment (e.g., unsealing, loading, discharge, etc.) depending on the geographical position where the tank vehicle is. More specifically, for example, the control unit may have programmed the position where a particular compartment can be loaded or unloaded, so that when the tank vehicle is not in that position, the control unit might prevent the compartment to be loaded or unloaded or generate an alarm signal due to an improper loading or unloading of the compartment as the vehicle is in a geographical position not authorized to do so.

According to a further embodiment, this verification might be performed at a delayed time (not in real time), so that all the information relating to geo-position where the events have occurred could be analysed by the central control unit to determine if there has been any event out of its established geo-position, generating an alarm.

The part of the GPS that might be part of the control unit would be the electronics, while the GPS antenna should in principle be arranged in a visible location to receive signals properly.

With regard to the memory, it could be for example a hard drive, a RAM memory, a ROM memory, a flash memory, a solid state memory or any other device capable of permanently or temporarily storing data. In addition, this memory may be part of the control unit or it may be external thereto. Its main purpose, among others, is to store all the generated information relating to the different compartments of the tank vehicle. Thus, for example, the state of each compartment, associated for example with date and hour, and/or changes occurring in the different sensor elements in the system, also associated for example with date and hour, can be stored in this memory in the control unit. In the case that the system according to the invention also comprises the GPS, for example, the geographical position (geo-position) of the tank vehicle when a state change of a compartment or a sensor element occurs could be also stored in this memory in the control unit.

In addition, all the information stored in the memory might be made accessible from the outside (for example, from the central control unit, if any) through the module for connecting the system to a communications network, or through the wireless communication system.

According to a further embodiment, the module for connecting the control unit to at least one communications network such as a global communications network (e.g. Internet) may be of the wired or wireless type. Thus, in case of being of the wireless type, it might be based on GSM, GPRS, 3G, 4G or satellite technology.

The wireless communication system might be short ranged, e.g., of the Bluetooth, NFC or Wifi type, and its main purpose might be to connect the control unit to a portable device (such as a tablet or smart-phone). Thus, from a suitable computer program running in the mobile device, it would be possible to carry out updates or revisions of the control unit (e.g. for its operating system or for the computer program running thereon, in case it is a computer device) as well as retrieving the information stored in the above described memory, whether it is internal or external to the control unit.

As regards the display screen, as described above, its main purpose is to provide information relating to the state of each of the compartments of the tank vehicle as well as on the various sensor elements arranged therein and on the tank vehicle in general. This information can be provided based, for example, on particular symbols. According to different embodiments, the system may comprise a display screen for all of the compartments or, for example, a display screen for each compartment, showing the state of the compartment with which it is associated.

According to a further aspect, a computer program product is provided comprising program instructions for causing a control unit (such as any of those described above) to carry out the method for controlling a product loading state of at least one compartment in a tank vehicle, as described above.

Said computer program may be stored on a physical storage media, such as a recording medium, a computer memory, or read-only memory, or it may be carried by a carrier wave, such as an electrical or optical carrier wave.

On the other hand, a system for controlling the loading state of at least one product in a vehicle tank compartment is provided, the compartment comprising a bottom valve and a product filling/discharge valve, which may comprise:
- a first sensor element adapted to detect the opening/closing of the bottom valve and to generate a control signal indicative of the state of this bottom valve;
- a second sensor element adapted to detect the opening/closing of the filling/discharge valve and to generate a control signal indicative of the state of the filling/discharge valve;
- a third sensor element adapted to detect the presence/absence of product in the compartment and to generate a control signal indicative of the presence/absence of product in this compartment;
- a control unit as described above.

According to one embodiment the compartment may comprise a product filling/discharge pipe, which is connected, at one end thereof, to a filling/discharge valve, and at the other end thereof, to the bottom valve. Said third sensor element may be arranged on this pipe. Alternatively or additionally, the third sensor element may be arranged at an intermediate flange between the filling/discharge valve and the filling/discharge pipe.

In addition, the system may further comprise any of the following sensor elements:
- a fourth sensor element adapted to detect the opening/closing of a box for housing the filling/discharge valves present in the tank vehicle and to generate a control signal indicative of the state of the box for housing the filling/discharge valves;
- a sensor element that is associated with a manhole cover associated with the compartment, this sensor element being adapted to detect the opening/closing of the manhole cover and to generate a control signal indicative of the state of the manhole cover;
- a sensor element that is associated with the cap of a guide tube for measuring the product level in the compartment, this sensor element being adapted for detecting the opening/closing the cap of the guide tube for measuring the product level in the compartment and to generate a control signal indicative of the state of this cap of the measuring guide tube;
- a sensor element that is associated with a box for housing a control unit present in the vehicle tank, the sensor element being adapted to detect the opening/closing of the box for housing the control unit and to generate a control signal indicative of the state of this box for housing the control unit;
- a sensor element that is associated with a box for housing a pneumatic distributor present in the tank vehicle, the sensor element being adapted to detect the opening/closing of the box for housing the pneumatic distributor and to generate a control signal indicative of the state of this box for housing the pneumatic distributor.

According to a further embodiment, the sensor elements may be selected from among inductive, magnetic, optical sensors, inclinometers, and/or infrared barriers, and they may be of the NAMUR type.

In addition, the system may also comprise any of the following elements (whether or not they are also included in a control unit suitable for this system):
- a satellite positioning system (GPS);
- a memory for storing at least information relating to the tank vehicle compartment state;
- a module for connecting the system to at least one communications network.

Furthermore, the system may also comprise a system for mechanically sealing the seal filling/discharge valve of at least one compartment. For example, the mechanical sealing system may be based on the system disclosed in the Spanish patent ES 2116239 B1, titled *"Sistema de precintado de bocas de carga y descarga de producto en vehiculos cisterna".* Basically, this system comprises, inter alia, a radio transmitter that can send a signal to an electro-pneumatic assembly (which may be the above described pneumatic distributor itself) mounted on the tank vehicle, said electro-pneumatic assembly comprising a receiver for the signal from the emitter; a pneumatic double acting cylinder associated with a solenoid valve arranged to receive the electrical signal from the receiver to proceed with the sealing, and further to receive a pneumatic signal to proceed with the unsealing; with the sealing/unsealing being carried out by a movable element and capable of moving into and/or away from the corresponding tank loading/unloading opening, said element being linked to the stem of said pneumatic cylinder; a safety device being further provided in functional combination with a pair of manual push buttons, that may be actuated simultaneously for achieving the corresponding unsealing; a compressed air storage being also provided for storing pressurized air for supplying a pneumatic circuit and with flow controllers to adjust the displacement of the piston rod and thus the displacement of the sealing element.

The overall system for controlling a product loading state of at least one compartment in a tank vehicle described herein can be installed in a tank vehicle or the like, intended to control the state of the various compartments which are part thereof.

Likewise, this system is suitable for carrying out a method for tamper detection of at least one compartment of the tank vehicle where it is installed. For this purpose, the system is capable of performing the following method:
- Sealing the compartment as described above, based on the method of controlling a product loading state of at least one compartment in a tank vehicle;
- Receiving at least one control signal from any of the sensor elements, indicative a state change;
- Detecting tampering of the tank vehicle compartment from the control signals received.

Basically, this method for compartment tamper detection is simply a specification of the above described method relating to the control of a product loading state of at least one compartment in a tank vehicle. Once the compartment has been sealed tampering is detected if a control signal indicative of a state change of the element with which it is associated (for example, the bottom valve, the filling/discharge valve, the manhole cover, etc.) is generated by any of the sensor elements being part of the system before the vehicle reaches the loading centre (e.g. a service station).

For this reason, the control unit will be suitable for carrying out this method provided that it comprises the following elements:
- Computer/electronic means for sealing the compartment by carrying out the method for controlling a product loading state of at least one compartment in a tank vehicle;
- Computer/electronic means for receiving at least one control signal from any of the sensor elements, indicative of a state change;
- Computer/electronic means for tamper detection of the tank vehicle compartment, from the received control signal.

In the event that the control unit is purely computer related, it should comprise the above mentioned memory and processor, and this memory should include processor executable instructions capable of performing the steps described for the compartment tamper detection method. These instructions may be part of a computer program intended exclusively or not for such tamper detection of a compartment (or at least one) in a tank vehicle of the like.

In addition, a system might be also implemented which is exclusively (or not) suitable for tamper detection of at least one compartment in a tank vehicle. For this purpose, the system that might be implemented on a tank vehicle, should comprise at least:
- a first sensor element adapted to detect the opening/closing of the bottom valve and to generate a control signal indicative of the state of this bottom valve;
- a second sensor element adapted to detect the opening/closing of the filling/discharge valve and to generate a control signal indicative of the state of the filling/discharge valve;
- a third sensor element adapted to detect the presence/absence of product in the compartment and to generate a control signal indicative of the presence/absence of product in the compartment;
- a control unit, such as any of those described above, adapted exclusively or not for compartment tamper detection.

In addition, the invention provides a computer program product comprising program instructions for causing a control unit to carry out the method for tamper detection of at least one compartment in a tank vehicle, as described above.

Such a computer program may be stored on a physical storage media, such as a recording medium, a computer memory, or read-only memory, or they may be carried by a carrier wave, such as an electrical or optical carrier wave.

### BRIEF DESCRIPTION OF THE DRAWINGS

Specific embodiments of the present invention will be described in the following by way of non-limiting examples with reference to the accompanying drawings, in which:
Figure 1 shows a schematic diagram of a tank vehicle in which a possible embodiment of the arrangement of the system elements to control a compartment loading state in a tank vehicle according to the invention is shown;
Figure 2 shows a flow diagram of a possible embodiment of the method for controlling the loading state of at least one compartment of a tank vehicle according to the invention.

### DETAILED DESCRIPTION OF EMBODIMENTS

Numerous specific details of the invention will be disclosed in the following in order to provide a thorough understanding thereof. However, one skilled in the art should understand that the present invention may be put into practice without some or all of these specific details. On the other hand, certain well known elements have not been described in detail so as not to unnecessarily obscure the description of the present invention.

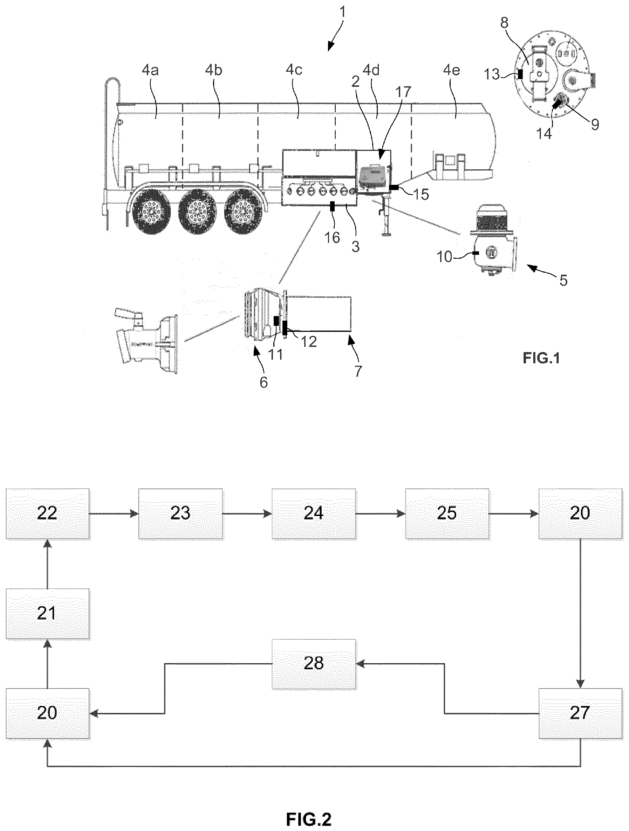

As seen in figure 1, the system for controlling the loading state of at least one compartment in a tank vehicle according to the invention is installed in a tank vehicle 1 which, in this preferred embodiment, is intended for transporting fuel, combustibles or similar products (although any other type of product in liquid form, such as chemicals, could be transported). The tank vehicle 1 has, among other elements, a housing (not shown) for receiving a pneumatic distributor which operates the bottom valves present in the compartments; a box (not shown) for housing mechanical sealing elements in the different filling/discharge valves (such box may not always exist since a mechanical sealing is not always required); a box 2 for housing system intelligence; a box 3 for housing filling/discharge valves of different compartments; and five compartments 4a, 4b, 4c, 4d, 4e for storing products (obviously the number of compartments present in the vehicle is variable, with one compartment being the minimum possible and with the maximum number of compartments being possible to be defined, for example, by the laws of each country). Since each compartment of the vehicle is independent of the rest, the present description will be given for one of the compartments (for example, the compartment referred to as 4d), but what is described herein is applicable to any of them.

As it may be also seen in figure 1, compartment 4d (that is, each compartment) comprises a bottom valve 5, a filling/discharge valve 6, and a filling/discharge pipe 7 connected, at one end thereof, to the filling/discharge valve 6 and, at the other end thereof, to the bottom valve 5. In addition, the compartment 4d further comprises:
- a manhole cover 8;
- a guide tube for measuring the product level (e.g. fuel) inside the compartment, this tube being covered by a cap 9.

Clearly, each compartment may comprise other openings for allowing accessibility to the product (or for loading of another product) present in the compartment.

Once the characteristics of the tank vehicle 1 have been defined, a description of a preferred embodiment of the system for controlling the loading state of at least one compartment in a tank vehicle according to the invention will be given below, based on said characteristics.

One possible preferred embodiment of this system may comprise the following sensor elements:
- A sensor element 10 adapted to detect the opening/closing of the bottom valve 5 of the compartment 4d, and to generate a control signal indicative of the state of the bottom valve (open/closed);
- A sensor element 11 adapted to detect the opening/closing of the filling/discharge valve 6 of the compartment 4d, and to generate a control signal indicative of the state of the filling/discharge valve (open/closed);
- A sensor element 12 adapted to detect the presence/absence of product in the compartment, with the third sensor element being possible to be arranged, for example, in the filling/discharge pipe 7 in the compartment product storage tank, in the bottom valve, or in a flange provided between the filling/discharge valve and the filling/discharge pipe (such as shown in figure 1, for the present preferred embodiment). The third sensor element is also adapted to generate a signal indicative of the presence/absence of product;
- A sensor element 13 adapted to detect the opening/closing of the manhole cover 8 associated with the compartment, and to generate a control signal indicative of the state of the manhole cover (open/closed);
- A sensor element 14 adapted to detect the opening/closing of the guide tube cap 9 for measuring the compartment product level, and to generate a signal indicative of the state (open/closed) of this cap of the guide tube for measuring product level.

Basically, the system may comprise a sensor element in each of the openings of the compartment through which it would be possible to access the inside thereof for loading and/or unloading of product, or for tampering. Obviously, the more the openings are sensed, the higher the system reliability.

The system may further comprise other sensor elements arranged on elements of the tank vehicle 1 itself, such as:
- A sensor element 15 adapted to detect the opening/closing of the box 2 for housing the system intelligence, and to generate a control signal indicative of the box state (open/closed);
- A sensor element 16 adapted to detect the opening/closing of the box 3 for housing the filling/discharge valves of the different compartments, and to generate a control signal indicative of this box state (open/closed);
- A sensor element (not shown) adapted to detect the opening/closing of the box (not shown) for housing the mechanically sealing elements of the various filling/discharge valves, and to generate a control signal indicative of the box state (open/close);
- A sensor element (not shown) that is associated with a box for housing a pneumatic distributor present in the tank vehicle, this sensor element being suitable for detecting the opening/closing of the box for housing of the pneumatic distributor and to generate a control signal indicative of the state this box for housing the pneumatic distributor.

Thus, the presence of sensor elements in the vehicle will depend on the various elements (boxes, etc.) in the vehicle. Each of the sensor elements may have associated therewith a sensor element, or not, depending on different factors such as the cost of the system or the required reliability.

The above described sensor elements may be of different types. Thus, among others, the sensor elements may be inductive, magnetic, optical sensors, inclinometers and/or infrared barriers. Said sensor elements may be, for example, of the NAMUR type.

At this point it is important to note that although in the present preferred embodiment the sensor elements generate control signals indicative of the state of the element being controlled, these signals could be of any nature (e.g., electrical or electronic signals). These signals could be, for example, data signals, as long as these data are indicative of the state of the element associated with the sensor element.

In addition, the system may also comprise a control unit 17, according to the invention, adapted to receive control signals from the different sensor elements described, and to set the loading state of the compartment 4d from the control signals received. Similarly, this control unit might be adapted to receive control signals from the various sensor elements described and to transmit this information (without interpreting it) to a control unit external to the vehicle (i.e., intelligence would not be in the vehicle itself but it would be present outside).

In either case, the control unit might be received in the box 2 for housing the system intelligence, and it may have different configurations. Thus, the control unit 17 may have a purely electronic configuration (for example, it may be a programmable electronic device such as an ASIC, a FPGA or a programmable controller) or it might be a computer device, which may comprise a memory and a processor, the memory being adapted to store a series of computer program instructions, and the processor being adapted to execute these instructions stored in the memory in order to generate the various events and actions for which the control unit has been programmed. The operation of the control unit 17 will be described below according to figure 2. Similarly, the control unit might have a hybrid configuration with computer elements and electronic elements in combination.

According to various embodiments, the system may comprise a control unit for each of the compartments, or a general control unit for all of the compartments in the tank vehicle 1, such as in the present preferred embodiment of the invention. For the first situation (a control unit for each compartment), the system may also comprise an upper control unit arranged or not in the tank vehicle itself, for managing all of the control units of the compartments.

Similarly, in any of the two embodiments described, there could also exist a central control unit arranged remotely or external to the tank vehicle 1, by means of which, for example, all (or part) of a tank vehicle fleet could be managed. For example, different alarms (e.g. by improper compartment unsealing) or events (loading, unloading, etc.) occurring in different tank vehicles could be managed by the central control unit. In this case, the system according to the invention should also include a module for connecting the system to a communications network, e.g. Internet (such as a GSM module, GPRS, 3G or 4G, or via satellite) or a wired or wireless network (such as an Ethernet or Wifi interface), for sending information between the tank vehicle and the central control unit (information may be sent bidirectionally or unidirectionally, the latter case preferably in the direction from the tank vehicle to the central control unit). Basically, the main purpose of this communication module is to provide connectivity to the tank vehicle 1, either from the vehicle to the outside and from the outside to the vehicle. According to the present embodiment, the module for connecting the system to a communications network could be received inside the box 2 for housing the system intelligence.

On the other hand, the system may further comprise a satellite positioning system (GPS), a memory for storing data, a wireless communication system (for example short-ranged), at least one display screen and/or a power source for the described electronics. Each of these elements may be part of the control unit 17 or they could be components external thereto. In any case, these elements could also be received inside the box 2 for housing the system intelligence.

More specifically, the GPS might be divided into two parts: the electronics that is the element that could be part of the control unit, and the GPS antenna, which in principle should be arranged in a visible location to receive signals properly. The GPS, among others, may provide different characteristics to the system according to the invention. On the one hand, the GPS could allow the position where the tank vehicle 1 is at all times to be known either from the central control unit (the control unit provided in the vehicle could provide this information to the central control unit through the module for connecting the system to a communications network) and from the control unit provided in the vehicle itself (the information could be stored on a memory data storage included in the control unit present in the vehicle, for further verification). On the other hand, the GPS could allow the position in which each event is generated to be known, so that all events occurring in the tank vehicle (loading, discharge, sealing, unsealing, etc.) could be geo-positioned.

Furthermore, the GPS could allow an action on a compartment by the control unit 17 to be authorized, or not, in real time (e.g., unsealing, loading, discharge, etc.) depending on the geographical position where the tank vehicle 1 is located. More specifically, for example, the control unit 17 may have programmed the position where a particular compartment 4d can be loaded or unloaded, so that when the tank vehicle 1 is not in that position, the control unit could prevent the compartment from being loaded or unloaded or it could generate an alarm signal due to improper loading or unloading of the vehicle compartment as the vehicle is in a geographical position not authorized to do so.

According to a further embodiment, this verification could be performed at a later time (not in real time), so that all information relating to the geo-position where events have been produced can be analysed by the central control unit to determine if there has been any event out of its established geo-position, generating an alarm.

With regard to the memory (e.g., a hard disk, a RAM memory, a ROM memory, a flash memory, a solid state memory or any other device capable of permanently or temporarily storing data), which may be internal and/or external to the control unit 17, its main purpose, among others, is to store all the information generated relating to the different compartments of the tank vehicle 1. Thus, the control unit 17 is capable of storing on this memory, for example, the state of each compartment, associated for example with date and time, and/or changes occurring in the different sensor elements present in the system, also associated for example with date and time. In the case that the system according to the invention also comprises a GPS (such as described above), the geographical position (geo-position) of the tank vehicle 1, for example, may be also stored on this memory by the control unit 17 when a state change of a compartment or a sensor element occurs.

In addition, all the information stored on the memory may be made accessible from the outside (e.g., from the central control unit, if any) through the module for connecting the system to a communications network.

The wireless communication system might be short ranged, e.g. of the Bluetooth, NFC or Wifi type, and its main purpose might the connecting the control unit 17 to a portable device (such as a tablet or a smartphone). Thus, from a suitable computer program running on the mobile device, it would be possible to carry out updates or revisions of the control unit (e.g. for its operating system or for the computer program running thereon, in case it is a computer device) as well as retrieving the information stored on the above described memory, whether it is internal or external to the control unit 17.

As regards the display screen, its main purpose is to provide information relating to the state of each of the compartments of the tank vehicle 1, as well as on the various sensor elements arranged therein and on the tank vehicle 1 in general. This information can be provided based, for example, on particular symbols. In the present preferred embodiment, it is a graphic LCD display, with backlit, but it could have any other configuration whenever appropriate to fulfil the above described purpose. According to different embodiments, the system may comprise a display screen for all of the compartments or, for example, a display screen for each compartment, displaying the state of the compartment with which it is associated.

In the event that the control unit arranged in the vehicle is not intelligent (i.e., its function is to receive information from the different sensor elements and to transmit this information to a central control unit arranged external to the vehicle) the presence of a display screen in the vehicle might not be necessary since the state of the different compartments would only be visible in the central control unit, i.e., in the control unit receiving the information, not in the system installed in the vehicle.

Regarding the electronics power supply disposed in the system, in the preferred embodiment the electronics will not be powered directly from the vehicle battery but it passes through an internal power supply that transforms this into an intrinsically safe power supply. Thus, vehicle batteries are connected to an internal power supply which could also recharge an internal battery (formed, e.g. of NiCd batteries), intended for supplying the system electronics according to the invention when the external power supply is switched off.

Going into greater detail on the operation of the control unit 17, one of its purposes is setting the loading state of the compartment 4d (note that the present description is given only for one compartment since its loading state is independent from the loading state of the rest of possible compartments in the vehicle tank 1).

The evolution of the state of the compartment 4d, which basically depends on the control signals provided by the different sensor elements arranged in the tank vehicle 1 can be seen in figure 2. In this figure, starting from a state in which the unit control sets 20 the compartment as "empty", the control unit sets 21 the "loading" state (provided that control signals received by the control unit 17 of the sensor elements are appropriate) to subsequently set 22 the "charged" state 22. If appropriate signals from the sensor elements are received by the control unit, the unit 17 sets 23 the state of the compartment 4d as "sealed". Typically, these described compartment states occur in a loading centre of the tank vehicle 1.

Once the compartment 4d has been electronically sealed (a mechanical sealing of the filling/discharge valve corresponding to the compartment 4d may be also performed, if the vehicle has this mechanical sealing system, from a control signal generated by the unit 17 to said control system, when the control unit sets the electronic "sealing" state), the tank vehicle 1 is started until it reaches a customer centre (e.g., a service station). If while the vehicle is traveling to the customer centre, tampering of any of the elements in any compartment (bottom valve, filling/discharge valve, manhole cover, etc.) associated with the sensor element occurs, the control unit 17 sets 24 the compartment state as "unsealed" (at least the control unit causes an electronic unsealing of the compartment to be performed, but it may also cause a mechanical unsealing if the tank vehicle is provided with it).

Conversely, if such tampering does not occur, the compartment 4d of the tank vehicle 1 reaches the customer centre with the "sealed" state already set by the control unit in the loading centre. The state of each of the compartments (sealed, unsealed, etc.) can be verified by the driver of the vehicle and/or any representative of the customer centre through the display screen in the vehicle.

When appropriate control signals from the sensor elements are received by the control unit, it sets the "unsealed" state 24. Subsequently, the control unit sets 25 the compartment state as "unloading" and once it has been unloaded, the control unit 17 sets 20 again the compartment state as "empty".

In view of this compartment state, the control unit can perform 27 a verification on whether the compartment is really empty. As a general rule such verification is performed when the vehicle is again at the loading centre, before carrying out a new compartment loading, although it could also be done at the customer centre or somewhere between the customer centre and the loading centre. In case of negative result in this verification, the control unit shows that remaining product exists in the compartment and purge 28 thereof is required. In case of positive result in the verification 27 or once purge has been performed, the control unit 17 sets 20 again the compartment state as "empty".

In summary, the state of the compartment set by the control unit can be any of the following:
- Purge
- Empty. This state may occur after the "purge" state or after the "unloading" state
- Loading
- Loaded
- Sealed
- Unsealed
- Unloading
- Incomplete unloading
- Resuming incomplete unloading

At this point it is important to note that the established order should be followed so that the compartment state can be changed, that is, for example the "loaded" state can not be set by the control unit 17 if "empty" and "loading" states have not previously occurred. In addition, it is also important to note that each time a given compartment state has been set by the control unit, a control signal may also be generated causing the display screen to show the compartment state.

In general, for the control unit 17 to be capable of setting the proper compartment state control signals from different sensor elements should have been previously received. Thus, one embodiment of the control unit 17 according to the invention is capable of carrying out the method for setting the loading state of the compartment 4d in the tank vehicle 1, which may basically comprise:
- Receiving a control signal generated by the sensor element 10 associated with the bottom valve 5, indicative of the state of this valve;
- Receiving a control signal generated by the sensor element 11 associated with the filling/discharge valve 6, indicative of the state of this valve;
- Receiving a control signal generated by the sensor element 12 arranged in the compartment (in the present embodiment it is placed in a flange between the filling/discharge pipe 7 and the filling/discharge valve, although it could be placed in other locations as described above), indicative of the presence or absence of product;
- Determining the loading state of the compartment 4d from the received control signals.

According to a further embodiment and as discussed above, the control unit 17, in the case that it has no intelligence, it may be capable of carrying out the method for setting the loading state of the compartment 4d of the tank vehicle 1, which may basically comprise:
- Receiving a control signal generated by the sensor element 10 associated with the bottom valve 5, indicative of the state of this valve;
- Receiving a control signal generated by the sensor element 11 associated with the filling/discharge valve 6, indicative of the state of this valve;
- Receiving a control signal generated by the sensor element 12 arranged in the compartment, indicative of the presence or absence of product;
- Sending the received control signals to a control unit external to the vehicle (for example, a control unit remote from the vehicle).

Thus, the intelligence is not in the control unit 17 itself but it is in the control unit external to the vehicle, so that determining the loading state of the compartment 4d from the control signals received is not carried out in the control unit 17 but in the external control unit.

Depending on the control signals received from the various sensor elements, the control unit 17 (or the control unit external to the vehicle according to the above described embodiment) sets the compartment state. As described above, the compartment initial state is always the empty state. Thus, the control unit sets 20 the state of the compartment 4d as empty when:
- A signal indicative that the bottom valve 5 is closed is received as a control signal from the first sensor element 10;
- A signal indicative that the filling/discharge valve 6 is closed is received as a control signal from the second sensor element 11;
- A signal indicative of the absence of product in the filling/discharge pipe 7 is received as a control signal from the third sensor element 12.

The fact that the filling/discharge valve is closed is mainly caused when disconnecting the discharge hose from said filling/discharge valve. In addition, disconnection also involves pneumatically closing of the bottom valve. At this point it is important to note that for the compartment changes to an empty state it is necessary to have previously been in an "unloading" state. At the time when unloading of product from the compartment has been completed and the discharge hose is disconnected, a state change occurs with both the filling/discharge valve and the bottom valve being closed.

Note that, once the compartment state has been set as empty the control unit 17 may perform an empty state verification. To do this, starting from an empty compartment state, the control unit can re-set the loading state of the compartment as empty when:
- A signal indicative that the bottom valve 5 is opened is received as a control signal from the first sensor element 10;
- A signal indicative that the filling/discharge valve 6 is open is received as a control signal from the second sensor element 11;
- A new signal indicative of the absence of product in the compartment is received as a control signal from the third sensor element 12.

Preferably, the control unit 17 may be the one acting directly on the bottom valve and causing it to be opened without acting on the filling/discharge valve since the state of this valve is irrelevant for carrying out the empty state verification.

In the event that during compartment empty state verification, a signal indicative of the presence of product in the compartment is received by the control unit 17 (or the external control unit) as a control signal from the third sensor element, the method may comprise:
- Setting the compartment loading state as purge;
- Once the compartment has been purged, receiving as a control signal from the third sensor element 12 a signal indicative of the absence of product in the compartment.

Receiving a control signal from the third sensor element indicative of the presence of product in the compartment may be caused by product remaining on the walls of the compartment during product unloading, which product falls to the compartment bottom and after a period of time (if product quantity is enough) it is detected by the third sensor element 12 provided in the compartment. In any case, receiving a control signal from the third sensor element 12 indicative of the absence of product in the compartment involves setting again the compartment state as empty.

Once the state of the compartment 4d has been set by the control unit 17 as empty, it should cause the bottom valve 5 to close. This latter action is mainly a security feature and it may be established by the laws of different countries. Thus, the state of the various sensor elements is:
- The corresponding sensor element indicates that the bottom valve is closed;
- The corresponding sensor element indicates that the filling/discharge valve is closed;
- The corresponding sensor element indicates the absence of product.

In addition, there is also the possibility that the system according to the invention prevents a compartment from being loaded in the event that there is product retained therein. Thus, in the event that the presence of product in the compartment is detected by any of the liquid sensors (basically the sensor provided in the compartment), the system can prevent it from being loaded by cutting off the signal ground in the socket (pin nine in the case of a five-wire system or pin eight in the case of a two-wire system). The socket is the element that connects the tank vehicle overfill prevention system with the controller of said system in the loading centre. If a correct ground connection is not detected by this controller, loading is not authorized.

Then, starting from the described loading state, the control unit sets 21 the compartment state as "loading" if after the loading arm of the loading centre has been connected to the filling/discharge valve 6:
- A signal indicative that the filling/discharge valve 6 is open (opening of this valve is achieved by connecting the loading arm) is received as a control signal from the second sensor element 11;
- A signal indicative that the bottom valve 5 is open (this valve is pneumatically opened when the loading arm is connected to the filling/discharge valve) is received as a control signal from the first sensor element 10;
- A signal indicative of the presence of product in the compartment is received as a control signal from the third sensor element 12.

Once the compartment state has been set by the control unit as "loading" the next compartment state should be the "loaded" state. The control unit 17 sets 22 this "loaded" state from the "loading" state when:
- A signal indicative that the filling/discharge valve 6 is closed (closing of this valve is usually achieved by disconnecting the loading arm from this filling/discharge valve) is received as a control signal from the sensor element 11 associated with the filling/discharge valve 6;
- A signal indicative that the bottom valve 5 is closed (this valve is pneumatically closed when disconnecting the loading arm from the filling/discharge valve) is received as a control signal from the sensor element 10 associated with the bottom valve 5;
- A signal indicative of the presence of product in the compartment is received as a control signal from the sensor element 12 arranged in the compartment. Clearly, a state change does not occur in this sensor element.

It is important to note that the amount of product to be loaded in each compartment of the tank vehicle 1 is at no time determined by the control unit 17. This amount of product is previously predefined at the loading centre and may depend on many factors (for example, compartment capacity, product needs at the customer centre, etc.).

The next state of the compartment should be the "sealed" state. For this purpose, the control unit 17 sets 23 this sealed state, starting from the loaded state when:
- A signal indicative of closing the box 3 for housing the filling/discharge valves is received as a control signal from the sensor element 16 adapted to detect the opening/closing of this box in the various compartments.

There are also other situations in which the sealing of the compartment may occur other than detection of the closing of the box for housing the filling/discharge valves. Thus, some of said other possibilities might be:
- Through the GPS signal, which indicates that the tank vehicle is in an authorized loading site;
- By pushing a sealing button, or a sequence of buttons;
- Through a control signal produced by the control unit over a predetermined time elapsed since the tank vehicle has been started;
- Automatically once the filling/discharge valve and the bottom valve have been closed and for a predetermined time the filling/discharge valve has not been opened again.

The control unit 17 sets at least the electronic sealing of the compartment or all of the compartments which have all gone through the different states until reaching a loaded state. As discussed above, a control signal to the mechanical sealing system (if it exists in the vehicle) can be also generated by the control unit for performing a compartment mechanical sealing.

As described above, the state following the sealed state is the "unsealed" state. Such state may be set 24 by the control unit 17 in different situations, mainly when the vehicle arrives at the customer centre (e.g., a service station), and usually by an action on the part of the driver of the vehicle or a representative of the customer centre. Thus, the control unit 17 may set 24 a compartment voluntary unsealing state when:
- the discharge hose is connected to the filling/discharge valve;
- any of the elements having a sensor element associated therewith (for example, a signal indicative of the opening of the box is received as a control signal by the control unit from the sensor element 16 adapted to detect the opening/closing of the box 3 for housing the filling/discharge valves of the different compartments);
- the compartment is mechanically unsealed (if the vehicle is provided with this system);
- a winder arranged in the tank vehicle is actuated;
- any drawer for housing elements that allow product to be unloaded is actuated;
- a button or a set of buttons intended to unseal the compartment is actuated.

Before unsealing the compartments, a representative of the customer centre may usually verify, through an appropriate display screen, if the state of the compartments is actually the sealed state. If this is not the case, it means that there has been tampering of the compartment 4d during vehicle travel (more specifically one of its elements, such as the bottom valve, the filling/discharge valve and/or the manhole cover, etc.) or any of the elements of the tank vehicle 1 (such as the box for housing the pneumatic distributor and/or the box 2 for housing the system intelligence) and the vehicle may be refused by the representative of the customer centre, among other things.

In this described case, the control unit 17 may also set 24 an unsealed state (in this case it refers to an unintended compartment unsealing, for example, due to tampering thereof) when:
- At least one control signal is received from any of the sensor elements that are part of the system according to the invention, indicative of a state change of the element with which it is associated.

In the latter case, as discussed above, unsealing is caused by tampering of any of the elements of the compartment (for example, bottom valve, filling/discharge valve, etc.) or the tank vehicle 1 (box for housing the pneumatic distributor, box 2 for housing the system intelligence, box 3 for housing the filling/discharge valves, etc.). Such tampering may have the purpose of loading product in a compartment or unloading it therefrom either by the operator of the vehicle or by a third party.

In any case, if the vehicle has a mechanical sealing system, the above described electronic unsealing may also involve a mechanical unsealing of the compartment. Thus, if the control unit 17 sets the electronic unsealing compartment state a control signal may be also generated to the corresponding pneumatic system for causing a mechanical unsealing of the compartment. Alternatively, electronic unsealing and mechanical unsealing may be completely independent of each other.

If unsealing occurs voluntarily at the customer centre, the next state that should set by the control unit 17 is the "unloading" state. The control unit sets 25 this state for the compartment 4d when, starting from the unsealed state and after connecting the discharge hose of the the customer centre to the filling/discharge valve 6:
- A signal indicative that the filling/discharge valve 6 is open (opening of the filling/discharge valve usually occurs when connecting the discharge hose to this valve) is received as a control signal from the sensor element 11 associated with this valve;
- A signal indicative that the bottom valve 5 is open (opening of the filling/discharge valve 6 automatically causes the pneumatic opening of the bottom valve 5) is received as a control signal from the sensor element 10 associated with the bottom valve 5;
- A signal indicating the presence of product in the compartment is received as a control signal from the sensor element 12 arranged in the compartment.

Once unloading of the compartment has occurred, the compartment state should be set by the control unit 17 as "empty". Thus, the compartment state is set 20 by the control unit as empty from an unloading state when:
- A control signal from the sensor element 11 associated with the filling/discharge valve 6 is received indicative that this valve is closed (closing of this valve is usually performed when the discharge hose is disconnected from the filling/discharge valve);
- A control signal from the sensor element 10 associated with the bottom valve 5 is received indicative that this valve is closed (closing of the filling/discharge valve 6 automatically causes automatic closing of the bottom valve 5);
- A control signal from the sensor element 12 arranged in the compartment is received indicative of the absence of product in the compartment.

If after the unloading method is started and the "unloading" state has been generated interruption of unloading occurs, there may be two additional states. One of them may be an "incomplete unloading" state and it may occur, from an "unloading" state, when:
- A control signal from the sensor element 11 associated with the filling/discharge valve 6 is received indicative that the valve is closed;
- A control signal from the sensor element 10 associated with the bottom valve 5 is received indicative that this valve is closed (closing of the filling/discharge valve 6 usually involves pneumatic closing of the bottom valve 5);
- A control signal from the sensor element 12 arranged in the compartment is received indicative of the presence of product in the compartment.

The "resuming incomplete unloading" state will be then produced which will occur when, starting from the incomplete unloading state, the control unit:
- Receives a control signal from the sensor element 11 associated with the filling/discharge valve 6 indicative that the valve is open;
- Receives a control signal from the sensor element 10 associated with the bottom valve 5 indicative that this valve is open;
- Receives a control signal from the sensor element 12 arranged in the compartment indicative of the presence of product in the compartment.

Accordingly, once the compartment is empty, the state of the various sensor elements is:
- The corresponding sensor element indicates that the bottom valve is closed;
- The corresponding sensor element indicates that the filling/discharge valve is closed;
- The corresponding sensor element indicates the absence of product.

As already described above, when the tank vehicle 1 returns to the loading centre for carrying out a new loading of the compartment, the control unit may perform a verification of the compartment empty state. For this purpose, the control unit 17 causes the bottom valve to be opened, from which the control unit performs the verification of the compartment empty state as described above.

Whatever the state set by the control unit 17 with respect to the compartment, this control unit may generate events that may be stored in the above described memory and/or they may be sent to the central control unit or to an external one if any. In any case, these events may have a structure based on text lines using the following pattern:
*Tank Truck Registration Number; Date; Time; GPS Position; Id of the Compartment where the event is generated; Event.*

Three event types may be established:
1.- Those occurring in the normal method (carrying out the loading and unloading method) in the appropriate location.
2.- Those produced by any type of failure or tampering of the equipment.
3.- Those occurring in inappropriate locations.

To determine the state of each event, its GPS coordinates should be cross checked with a customer centre and loading centre database. It is not required that all events undergo this verification. Listed below are some of them:
1st Type: normal events that are sent provided that there is a state change, or when the communication module is available:
   - Purge. This event is generated after verification of the empty state, which may occur at any location.
   - Empty. Empty compartment at the loading centre.
   - Loaded compartment. The same as the above empty state.
   - Sealed compartment. The same as the above empty state.
   - Unsealed compartment. This event should be given compulsorily at the customer centre to which the loading order is intended. If it is not the case, the event must be indicated as Alarm.
   - Unloading compartment. The same as unsealed.
   - Empty. This state is defined as empty compartment after unloading. The same as unsealed.
   - Incomplete unloading. This state is defined as closed bottom valve, closed filling/discharge valve and sensor for the presence/absence of wet product. The same as unsealed.
   - Resuming incomplete unloading. This state is defined as open bottom valve, open filling/discharge valve and sensor for the presence/absence of product in wet compartment. The same as unsealed.
2nd type: any state that can be produced and which by its nature must be regarded as "IMMEDIATE ALARM". Among them, they are the following which are those generated by the control unit 17 and those that should be identified as an Immediate Alarm regardless of where they occur. There is a number of Immediate Alarms programmed in the control unit 17.
3rd Type: as in type 2, they are ALARM events and are those normal events occurring outside the places allowed for loading/unloading.

Given the impossibility of sending real-time events, when there is no power in the tank vehicle no information is sent. This information may be stored in the control unit internal memory and then it may be sent in packets.

From what it has been described it is technically possible to define the configuration of the control unit 17, which may be more electronic or more computer related. Thus, one possible configuration of the control unit 17 may comprise:
- Computer/electronic means for receiving a control signal generated by the first sensor element 10 adapted to detect the opening/closing of the bottom valve 5 and to generate a control signal indicative of the state of the bottom valve 5;
- Computer/electronic means for receiving a control signal generated by the second sensor element 11 adapted to detect the opening/closing of the product filling/discharge valve 6 and to generate a control signal indicative of the state of the filling/discharge valve 6;
- Computer/electronic means for receiving a control signal generated by the third sensor element 12 adapted to detect the presence/absence of product in the compartment and to generate a control signal indicative of presence/absence of product in this compartment;
- Computer/Electronic means for setting the compartment loading state from the received control signals.

Taken into account this configuration, the computer means may be fully computer related, fully electronic related or a combination thereof.

According to a further embodiment, the control unit 17 may have a fully computer related configuration so that it may comprise a memory and a processor, wherein the memory stores computer program instructions executable by the processor, the instructions comprising functionalities for carrying out a method for controlling a product loading state of at least one compartment in a tank vehicle, as described above.

Whatever the configuration of the control unit 17, it may also comprise any of the following elements:
- the satellite positioning system (GPS). As described above, the control unit may include the electronics of the GPS, while the antenna should be positioned so as to have good reception;
- a memory for storing at least information about the tank vehicle compartment state, as well as any state change of any sensor, position, time, etc.
- the module for connecting the control unit to at least one communications network as a global communications network (e.g. Internet).

In the event that the control unit 17 with a fully computer related configuration, the set of instructions may be part of a computer program that allows a method for controlling a product loading state of at least one compartment in a tank vehicle to be carried out, such as described above.

On the other hand, from what it has been described so far, it is also possible to define a system configuration for controlling a product loading state of at least one compartment in a tank vehicle. Thus, in this embodiment, the system may comprise:
- the first sensor element 10 adapted to detect the opening/closing of the bottom valve 5 and to generate a control signal indicative of the state of the bottom valve;
- the second sensor element 11 adapted to detect the opening/closing of the filling/discharge valve 6 and to generate a control signal indicative of the state of the filling/discharge valve;
- the third sensor element 12 adapted to detect the presence/absence of product in the compartment and to generate a control signal indicative of the presence/absence of product in this compartment;
- the described control unit 17 whatever its configuration (electronic, computer, etc.).

In addition, this system may further comprise:
- the fourth sensor element 16 adapted to detect the opening/closing of the box 3 for housing the filling/discharge valve present in the tank vehicle 1 and to generate a control signal indicative of the state of the box for housing the filling/discharge valves;
- the sensor element 13 that is associated with the manhole cover 8 associated with the compartment, this sensor element being adapted to detect the opening/closing of the manhole cover and to generate a control signal indicative of the state of the manhole cover;
- the sensor element 14 that is associated with the cap 9 of the guide tube for measuring the product level in the compartment, this sensor element being adapted to detect the opening/closing the tap of the guide tube for measuring the product level in the compartment and to generate a control signal indicative of the state of this cap of the measuring tube guide;
- the sensor element 15 that is associated with the box 2 for housing the control unit 17 present in the tank vehicle 1, the sensor element being adapted to detect the opening/closing of the box for housing the control unit and to generate a control signal indicative of the state of this box for housing the control unit;
- the sensor element that is associated with the box for housing the pneumatic distributor present in the tank vehicle 1, the sensor element being adapted to detect the opening/closing of the box for housing the pneumatic distributor and to generate a control signal indicative of the state of this box for housing the pneumatic distributor.

Of course, since the compartment may comprise further accesses to the product from the outside (basically openings formed in the compartment with different functionalities), it is possible that the system comprises sensor elements associated with these other accesses.

In the event that the control unit 17 does not include a satellite positioning system (GPS), this may be external to the control unit, being part of the system. Similarly, if the control unit 17 does not include a memory for storing at least information relating to the tank vehicle compartment state, it may be part of the system, being external to the control unit. In the same way, if the control unit does not include a module for connecting the system to at least one communications network, this may be part of the system, being external to the control unit.

The overall system described herein can be installed in a tank vehicle or the like, with the purpose of controlling the state of the various compartments which are part of it.

Similarly, this system may be also suitable for carrying out a method for detecting tampering of at least one compartment in a tank vehicle where it is installed. For this purpose, the system is capable of carrying out the following method:
- Sealing the compartment as described above, based on the method for controlling a product loading state of at least one compartment in a tank vehicle;
- Receiving at least one control signal from any of the sensor elements, indicative of a state change;
- Detecting tank vehicle compartment tampering from the control signals received.

Basically, this compartment tamper detection method is simply a specification of the above described method relating to the control of a product loading state of at least one compartment in a tank vehicle. Once the compartment has been sealed tampering is detected if a control signal indicating a state change of the element with which it is associated (for example, the bottom valve, the filling/discharge valve, the manhole cover, etc.) is generated by any of the sensor elements being part of the system before the vehicle reaches the loading centre (e.g. a service station).

For this reason, the control unit 17 will be suitable for carrying out this method provided that it comprises the following elements:
- Computer/electronic means for sealing the compartment by carrying out the method according to clause 9 for controlling a product loading state of at least one compartment (4a, 4b, 4c, 4d, 4e) in a tank vehicle (1);
- Computer/electronic means for receiving at least one control signal from any of the sensor elements, indicative of a state change;
- Computer/electronic means for tamper detection of a compartment in a tank vehicle from the received control signal.

In the event that the control unit is purely computer related, it should comprise the above mentioned memory and processor and said memory should include instructions executable by the processor capable of performing the steps for the described compartment tamper detection method. These instructions might be part of a computer program intended, exclusively or not, for tamper detection of a compartment (or at least one) in a tank vehicle or the like.

Furthermore, a system might be also implemented, which is exclusively (or not) suitable for tamper detection of at least one compartment in a tank vehicle. For this purpose, the system that might be implemented on a tank vehicle should include at least:
- the first sensor element 10 adapted to detect the opening/closing of the bottom valve 5 and to generate a control signal indicative of the state of the bottom valve;
- the second sensor element 11 adapted to detect the opening/closing of the filling/discharge valve 6 and to generate a control signal indicative of the state of the filling/discharge valve;
- the third sensor element 12 adapted to detect the presence/absence of product in the compartment and to generate a control signal indicative of presence/absence of product in the compartment;
- the described control unit adapted, exclusively or not, for compartment tamper detection.

Although only some embodiments and specific examples of the invention have been disclosed herein, those skilled in the art will realise that other alternative embodiments and/or uses of the invention as well as obvious modifications and equivalent elements are possible. Reference signs related to drawings and placed in parentheses in a claim are solely for attempting to increase the intelligibility of the claim, and shall not be construed as limiting the scope of the claim. The scope of the present invention should not be limited by particular embodiments, but should be determined only by a fair reading of the claims that follow.

Furthermore, although the embodiments of the invention disclosed herein with reference to the drawings include computer systems and methods carried out in computer systems, the invention also extends to computer programs, more specifically to computer programs in or on a carrier media, adapted for putting the invention into practice. The computer program may be in the form of source code, object code or in an intermediate code between source code and object code, such as in a partially compiled form, or in any other form suitable for use in the implementation of the methods according to the invention. The carrier medium may be any entity or device capable of carrying the program.

For example, the carrier medium may comprise a storage medium such as a ROM, for example a CD ROM, or a semiconductor ROM, or a magnetic recording medium such as a floppy disc or a hard disk. In addition, the carrier medium may be transmissible carrier medium such as an electrical or optical signal which may be transmitted via electrical or optical cable or by radio or other means.

When the computer program is contained in a signal that can be transmitted directly by means of a cable or other device or medium, the carrier medium may be formed by such cable or other device or medium.

Alternatively, the carrier medium may be an integrated circuit in which the computer program is embedded, said integrated circuit being adapted for carrying out or for being used in the embodiment of the relevant methods.

On the other hand, the invention may be also implemented by computer systems, such as personal computers, servers, a computer network of computers, laptops, tablets or any other programmable device or computer processor. Additionally or alternatively programmable electronic devices such as programmable logic controllers (ASICs, FPGAs, PLCs, etc.) may be also used.

Therefore, the invention may be implemented both in hardware and in software or in firmware, or in any combination thereof.

## Claims

1. Method for detecting tampering of at least one compartment (4a, 4b, 4c, 4d, 4e) in a tank vehicle (1), the compartment comprising a bottom valve (5) having a first sensor element (10) associated therewith adapted to detect the opening/closing of the bottom valve (5) and to generate a control signal indicative of the state of this bottom valve; and a product filling/discharge valve (6) having a second sensor (11) associated therewith adapted to detect the opening/closing of the filling/discharge valve (6) and to generate a control signal indicative of the state of this filling/discharge valve; the compartment having a third sensor element (12) associated therewith adapted to detect the presence/absence of product in the compartment and to generate a control signal indicative of the presence/absence of product in this compartment;
the method comprising:
- Setting a loading state of the compartment by a control unit (17) from received control signals of sensor elements (10, 11, 12);
- Setting the loading state as empty from received control signals indicative that the bottom valve (5) is closed, the filling/discharge valve (6) is closed and of the absence of product in the filling/discharge pipe (7);
- Setting the loading state as loading from received control signals indicative that the bottom valve (5) is open, the filling/discharge valve (6) is open and of the presence of product in the compartment, starting from a compartment loading state as empty;
- Setting the loading state as loaded from received control signals indicative that the bottom valve (5) is closed, the filling/discharge valve (6) is closed and of the presence of load in the compartment, starting from a compartment loading state as loading;
wherein the tank vehicle (1) comprises a box (3) for housing the filling/discharge valves present in the tank vehicle and a fourth sensor (16) adapted to detect the opening/closing of the box (3) for housing the filling/discharge valves and to generate a control signal indicative of the state of this box (3) for housing the filling/discharge valves;
the method comprising, starting from a compartment loading state as loaded:
- Receiving as a control signal generated by the fourth sensor element (16) a signal indicative that the box (3) for housing the filling/discharge valves is closed;
- Setting the loading state of the compartment (4a, 4b, 4c, 4d, 4e) as sealed, from the received control signal.
- Receiving by the control unit (17) at least one control signal from any of the sensor elements (10, 11, 12, 16), indicative of a state change;
- Detecting tampering of the tank vehicle compartment by the control unit (17), from the control signals received, if a control signal indicative of a state change of the element with which it is associated is generated by any of the sensor elements (10, 11, 12, 16) before the vehicle reaches a customer centre.

2. A control unit for detecting tampering of at least one compartment (4a, 4b, 4c, 4d, 4e) in a tank vehicle (1), comprising computer/electronic means for sealing the compartment by carrying out the method according to claim 1; each compartment comprising at least one bottom valve (5) having a first sensor element (10) associated therewith adapted to detect the opening/closing of the bottom valve (5) and to generate a control signal indicative of the state of the bottom valve; and a product filling/discharge valve (6) having a second sensor (11) associated therewith adapted to detect the opening/closing of the filling/discharge valve (6) and to generate a control signal indicative of the state of this filling/discharge valve; the compartment having a third sensor element (12) associated therewith adapted to detect the presence/absence of product in the compartment and to generate a control signal indicative of the presence/absence of product in this compartment; **characterized in that** it further comprises:
- Computer/electronic means for receiving at least one control signal from any of the sensor elements, indicative of a state change;
- Computer/electronic means for detecting tampering of the tank vehicle compartment, from the received control signal if a control signal indicative of a state change of the element with which it is associated is generated by any of the sensor elements (10, 11, 12, 16) before the vehicle reaches a customer centre.

3. A system for detecting tampering of at least one compartment (4a, 4b, 4c, 4d, 4e) in a tank vehicle (1), comprising a control unit according to claim 2, the compartment comprising at least one bottom valve (5) and a product loading/unlading valve (6), **characterized in that** it comprises:
- a first sensor element (10) adapted to detect the opening/closing of the bottom valve (5) and to generate a control signal indicative of the state of the bottom valve;
- a second sensor element (11) adapted to detect the opening/closing of the filling/discharge valve (6) and to generate a control signal indicative of the state of the filling/discharge valve;
- a third sensor element (12) adapted to detect the presence/absence of product in the compartment and to generate a control signal indicative of the presence/absence of product in the compartment.

4. A computer program product comprising program instructions for causing a control unit to carry out a method according to claim 1 for detecting tampering of at least one compartment (4a, 4b, 4c, 4d, 4e) in a tank vehicle (1).

5. A tank vehicle (1) comprising a system according to claim 3 for detecting tampering of at least one compartment (4a, 4b, 4c, 4d, 4e).

## Patentansprüche

1. Verfahren zur Erkennung von Manipulationen von mindestens einem Fach (4a, 4b, 4c, 4d, 4e) in einem Tankfahrzeug (1), wobei das Fach ein Bodenventil (5) umfasst, das ein erstes damit verknüpftes Sensorelement (10) hat, das angepasst ist, um das Öffnen/Schließen des Bodenventils (5) zu erkennen und ein Steuersignal zu erzeugen, das den Zustand von diesem Bodenventil (5) anzeigt; und ein Produktfüll-/Produktauslassventil (6) umfasst, das einen damit verknüpften zweiten Sensor (11) hat, der angepasst ist, um das Öffnen/Schließen des Füll-/Auslassventils (6) zu erkennen und ein Steuersignal zu erzeugen, das den Zustand von diesem Füll-/Auslassventil (6) anzeigt; wobei das Fach ein damit verknüpftes drittes Sensorelement (12) hat, das angepasst ist, um die Anwesenheit/Abwesenheit von Produkt in dem Fach zu erkennen und ein Steuersignal zu erzeugen, das die Anwesenheit/Abwesenheit von Produkt in diesem Fach anzeigt;
wobei das Verfahren folgendes umfasst:
- Das Einstellen von einem Ladezustand des Fachs mittels einer Steuereinheit (17) ausgehend von empfangenen Steuersignalen von Sensorelementen (10, 11, 12);
- Das Einstellen des Ladezustands als leer ausgehend von empfangenen Steuersignalen, welche einen geschlossenen Zustand des Bodenventils (5), einen geschlossenen Zustand des Füll-/Auslassventils (6) und die Abwesenheit von Produkt in dem Füll-/Auslassrohr (7) anzeigen;
- Das Einstellen des Ladezustands als in Ladung ausgehend von empfangenen Steuersignalen, welche einen offenen Zustand des Bodenventils (5), einen offenen Zustand des Füll-/Auslassventils (6) und die Anwesenheit des Produkts in dem Fach anzeigen, ausgehend von einem leeren Ladezustand des Fachs;
- Das Einstellen des Ladezustands als geladen ausgehend von empfangenen Steuersignalen, welche einen geschlossenen Zustand des Bodenventils (5), einen geschlossenen Zustand des Füll-/Auslassventils (6) und die Anwesenheit von Ladung in dem Fach anzeigen, ausgehend von einem Ladezustand des Fachs als in Ladung;
wobei das Tankfahrzeug (1) einen Kasten (3) zum Aufnehmen der in dem Tankfahrzeug anwesenden Füll-/Auslassventile und einen vierten Sensor (16) umfasst, der angepasst ist, um das Öffnen/Schließen des Kastens (3) zum Aufnehmen der Füll-/Auslassventile zu erkennen und ein Steuersignal zu erzeugen, das den Zustand von diesem Kasten (3) zum Aufnehmen der Füll-/Auslassventile anzeigt;
wobei das Verfahren, ausgehend von einem Ladezustand des Fachs als geladen, folgendes umfasst:
- Das Empfangen, als durch das vierte Sensorelement (16) erzeugtes Steuersignal, ein Signal, das einen geschlossenen Zustand des Kastens (3) zum Aufnehmen der Füll-/Auslassventile anzeigt;
- Das Einstellen des Ladezustands des Fachs (4a, 4b, 4c, 4d, 4e) als abgedichtet ausgehend von dem empfangenen Steuersignal.
- Das Empfangen durch die Steuereinheit (17) von mindestens einem Steuersignal aus einem von den Sensorelementen (10, 11, 12, 16), das eine Zustandsänderung anzeigt;
- Das Erkennen von Manipulationen des Tankfahrzeugfachs mittels der Steuereinheit (17), ausgehend von den empfangenen Steuersignalen, wenn ein Steuersignal, das eine Zustandsänderung des mit diesem verknüpften Elements anzeigt, durch eines von den Sensorelementen (10, 11, 12, 16) erzeugt wird, bevor das Fahrzeug ein Kundencenter erreicht.

2. Eine Steuereinheit zur Erkennung von Manipulationen von mindestens einem Fach (4a, 4b, 4c, 4d, 4e) in einem Tankfahrzeug (1) umfassend ein Computermittel/elektronisches Mittel zum Abdichten des Fachs, indem das Verfahren nach Anspruch 1 durchgeführt wird; wobei jedes Fach mindestens ein Bodenventil (5) umfasst, das ein erstes damit verknüpftes Sensorelement (10) hat, das angepasst ist, um das Öffnen/Schließen des Bodenventils (5) zu erkennen und ein Steuersignal zu erzeugen, das den Zustand des Bodenventils anzeigt; und ein Produktfüll-/Produktauslassventil (6), das einen damit verknüpften zweiten Sensor (11) hat, der angepasst ist, um das Öffnen/Schließen des Füll /Auslassventils (6) zu erkennen und ein Steuersignal zu erzeugen, das den Zustand von diesem Füll-/Auslassventil (6) anzeigt; wobei das Fach ein damit verknüpftes drittes Sensorelement (12) hat, das angepasst ist, um die Anwesenheit/Abwesenheit von Produkt in dem Fach zu erkennen und ein Steuersignal zu erzeugen, das die Anwesenheit/Abwesenheit von Produkt in diesem Fach anzeigt; **dadurch gekennzeichnet, dass** sie weiterhin folgendes umfasst:
- ein Computermittel/elektronisches Mittel zum Empfangen von mindestens einem Steuersignal aus einem der Sensorelemente, das eine Zustandsänderung anzeigt;
- ein Computermittel/elektronisches Mittel zum Erkennen von Manipulationen des Tankfahrzeugfachs, ausgehend von dem empfangenen Steuersignal, wenn ein Steuersignal, das eine Zustandsänderung des mit diesem verknüpften Elements anzeigt durch eines von den Sensorelementen (10, 11, 12, 16) erzeugt wird, bevor das Fahrzeug ein Kundencenter erreicht.

3. Ein System zur Erkennung von Manipulationen von mindestens einem Fach (4a, 4b, 4c, 4d, 4e) in einem Tankfahrzeug (1), umfassend eine Steuereinheit nach Anspruch 2, wobei das Fach mindestens ein Bodenventil (5) und ein Produktfüll-/Produktauslassventil (6) umfasst, **dadurch gekennzeichnet, dass** es folgendes umfasst:
- ein erstes Sensorelement (10), das angepasst ist, um das Öffnen/Schließen des Bodenventils (5) zu erkennen und ein Steuersignal zu erzeugen, das den Zustand des Bodenventils anzeigt;
- ein zweites Sensorelement (11), das angepasst ist, um das Öffnen/Schließen des Füll-/ Auslassventils (6) zu erkennen und ein Steuersignal zu erzeugen, das den Zustand des Füll-/Auslassventils anzeigt;
- ein drittes Sensorelement (12), das angepasst ist, um die Anwesenheit/Abwesenheit von Produkt in dem Fach zu erkennen und ein Steuersignal zu erzeugen, das die Anwesenheit/Abwesenheit von Produkt in dem Fach anzeigt.

4. Ein Computerprogrammprodukt umfassend Programmanweisungen, um eine Steuereinheit zur Durchführung von einem Verfahren nach Anspruch 1 zur Erkennung von Manipulationen von mindestens einem Fach (4a, 4b, 4c, 4d, 4e) in einem Tankfahrzeug (1) zu veranlassen.

5. Ein Tankfahrzeug (1) umfassend ein System nach Anspruch 3 zur Erkennung von Manipulationen von mindestens einem Fach (4a, 4b, 4c, 4d, 4e).

## Revendications

1. Procédé de détection de manipulations d'au moins un compartiment (4a, 4b, 4c, 4d, 4e) dans un véhicule-citerne (1), le compartiment comprenant une soupape de fond (5) ayant un premier élément capteur (10) lié à celle-ci adapté pour détecter l'ouverture / fermeture de la soupape de fond (5) et pour générer un signal de commande indicatif de l'état de cette soupape de fond ; et une soupape de remplissage / décharge (6) de produit ayant un second capteur (11) lié à celle-ci adapté pour détecter l'ouverture / fermeture de la soupape de remplissage / décharge (6) et pour générer un signal de commande indicatif de l'état de cette soupape de remplissage / décharge ; le compartiment ayant un troisième élément capteur (12) lié à celui-ci adapté pour détecter la présence / absence de produit dans le compartiment et pour générer un signal de commande indicatif de la présence / absence de produit dans ce compartiment;
le procédé comprenant :
- L'établissement d'un état de charge du compartiment moyennant une unité de commande (17) à partir de signaux de commande reçus d'éléments capteurs (10, 11, 12) ;
- L'établissement de l'état de charge comme vide à partir de signaux de commande qu'indiquent que la soupape de fond (5) est fermée, que la soupape de remplissage / décharge (6) est fermée et l'absence de produit dans le conduit de remplissage / décharge (7) ;
- L'établissement de l'état de charge comme en charge à partir de signaux de commande reçus qu'indiquent que la soupape de fond (5) est ouverte, que la soupape de remplissage / décharge (6) est ouverte et la présence de produit dans le compartiment, à partir d'un état de charge vide du compartiment ;
- L'établissement de l'état de charge comme chargé à partir de signaux de commande reçus qui indiquent que la soupape de fond (5) est fermée, que la soupape de remplissage / décharge (6) est fermée et la présence de charge dans le compartiment, à partir d'un état de charge en charge du compartiment ;
dans lequel le véhicule-citerne (1) comprend une boîte (3) pour loger les soupapes de remplissage / décharge présentes dans le véhicule-citerne et un quatrième capteur (16) adapté pour détecter l'ouverture / fermeture de la boîte (3) pour loger les soupapes de remplissage / décharge et pour générer un signal de commande qui indique l'état de cette boîte (3) pour loger les soupapes de remplissage / décharge ;
le procédé comprenant, à partir d'un état de charge chargé du compartiment :
- La réception comme signal de commande généré par le quatrième élément capteur (16) d'un signal qui indique que la boîte (3) pour loger les soupapes de remplissage / décharge est fermée ;
- L'établissement de l'état de charge du compartiment (4a, 4b, 4c, 4d, 4e) comme scellé, à partir du signal de commande reçu.
- La réception par l'unité de commande (17) d'au moins un signal de commande d'un quelconque des éléments capteurs (10, 11, 12, 16), qui indique un changement d'état ;
- La détection de manipulations du compartiment du véhicule-citerne par l'unité de commande (17), à partir des signaux de commande reçus, si un signal de commande indicatif d'un changement d'état de l'élément avec lequel il est lié est généré par l'un quelconque des éléments capteurs (10, 11, 12, 16) avant que le véhicule n'atteigne un centre clients.

2. Une unité de commande pour la détection de manipulations d'au moins un compartiment (4a, 4b, 4c, 4d, 4e) dans un véhicule-citerne (1), comprenant un moyen informatique/électronique pour sceller le compartiment en mettant en exécution le procédé selon la revendication 1 ; chaque compartiment comprenant au moins une soupape de fond (5) ayant un premier élément capteur (10) lié à celle-ci adapté pour détecter l'ouverture / fermeture de la soupape de fond (5) et pour générer un signal de commande indicatif de l'état de la soupape de fond ; et une soupape de remplissage / décharge (6) ayant un second capteur (11) lié à celle-ci adapté pour détecter l'ouverture / fermeture de la soupape de remplissage / décharge (6) et pour générer un signal de commande indicatif de l'état de cette soupape de remplissage / décharge ; le compartiment ayant un troisième élément capteur (12) lié à celui-ci adapté pour détecter la présence / absence de produit dans le compartiment et pour générer un signal de commande indicatif de la présence / absence de produit dans ce compartiment ; **caractérisée en ce qu'**elle comprend en outre :
- Un moyen informatique / électronique pour recevoir au moins un signal de commande d'un quelconque des éléments capteurs indicatif d'un changement d'état ;
- Un moyen informatique / électronique pour la détection de manipulations du compartiment du véhicule-citerne à partir du signal de commande reçu, si un signal de commande indicatif d'un changement d'état de l'élément avec lequel il est lié est généré par l'un quelconque des éléments capteurs (10, 11, 12, 16) avant que le véhicule n'atteigne un centre clients.

3. Un système pour la détection de manipulations d'au moins un compartiment (4a, 4b, 4c, 4d, 4e) dans un véhicule-citerne (1), comprenant une unité de commande selon la revendication 2, le compartiment comprenant au moins une soupape de fond (5) et une soupape de charge / décharge (6) de produit, **caractérisé en ce qu'**il comprend:
- un premier élément capteur (10) adapté pour détecter l'ouverture / fermeture de la soupape de fond (5) et pour générer un signal de commande indicatif de l'état de la soupape de fond ;
- un second élément capteur (11) adapté pour détecter l'ouverture / fermeture de la soupape de remplissage / décharge (6) et pour générer un signal de commande indicatif de l'état de la soupape de remplissage / décharge ;
- un troisième élément capteur (12) adapté pour détecter la présence / absence de produit dans le compartiment et pour générer un signal de commande indicatif de la présence / absence de produit dans le compartiment.

4. Un produit de programme informatique comprenant des instructions de programme pour faire qu'une unité de commande mise en exécution un procédé selon la revendication 1 pour détecter des manipulations d'au moins un compartiment (4a, 4b, 4c, 4d, 4e) dans un véhicule-citerne (1).

5. Un véhicule-citerne (1) comprenant un système selon la revendication 3 pour détecter des manipulations d'au moins un compartiment (4a, 4b, 4c, 4d, 4e).
